# EUROPEAN PATENT APPLICATION

(11) **EP 3 522 094 A1**
(43) Date of publication of application: **07.08.2019**
(21) Application number: 18202864.7
(22) Date of filing: 26.10.2018
(51) Int. Cl.: G06Q 30/02

(54) **SYSTEMS AND METHODS FOR GENERATING A DIGITAL SIGNATURE FOR VIRTUAL APPLICATION OF COSMETIC PRODUCTS**

(30) Priority: 02.02.2018 US 201862625402 P; 20.07.2018 US 201816040653
(71) Applicant: Perfect Corp., 231 New Taipei City (TW)
(72) Inventor: LEE, Meng-Chieh, 235 New Taipei City (TW); WU, Po-Ho, 709 Tainan City (TW)
(74) Representative: Stöckeler, Ferdinand

(57) **Abstract**

In a computing device utilized by a makeup professional providing makeup consultation, makeup professional credentials are obtained from the makeup professional, the makeup professional credentials being used to retrieve contact information for the makeup professional. The computing device obtains selections of cosmetic products and product information for each of the selected cosmetic products. The computing device generates a digital signature based on the makeup professional credentials and the selected cosmetic products, wherein the digital signature includes the contact information for the makeup professional and product information for each of the selected cosmetic products. The computing device grants access to the digital signature by a client device utilized by a user receiving a makeup consultation from the makeup professional.

## Description

### CROSS-REFERENCE TO RELATED APPLICATION

This application claims priority to, and the benefit of, U.S. Provisional Patent Application entitled, "Eliminating embarrassment of over-the-counter service," having Serial No. 62/625,402, filed on February 2, 2018, which is incorporated by reference in its entirety.

### TECHNICAL FIELD

The present disclosure generally relates to virtual application of cosmetic effects and more particularly, to systems and methods for makeup consultation using a digital signature.

### BACKGROUND

In retail establishments, professional makeup artists commonly assist individuals with applying cosmetic products to achieve a desired look. In some retail establishments, makeup professionals may utilize electronic setups that allow individuals to evaluate cosmetic products. However, given the number of cosmetic products that an individual may try on during a makeup consultation, it may be difficult and time consuming for an individual to retain all the information relating to the cosmetic products suggested by a makeup professional. Therefore, there is a need for allowing consumers to efficiently track and retain information on cosmetic products evaluated during the makeup consultation.

### SUMMARY

In accordance with one embodiment, a computing device utilized by a makeup professional providing makeup consultation obtains makeup professional credentials from the makeup professional, the makeup professional credentials being used to retrieve contact information for the makeup professional. The computing device obtains selections of cosmetic products and product information for each of the selected cosmetic products. The computing device generates a digital signature based on the makeup professional credentials and the selected cosmetic products, wherein the digital signature includes the contact information for the makeup professional and product information for each of the selected cosmetic products. The computing device grants access to the digital signature by a client device utilized by a user receiving a makeup consultation from the makeup professional.

In accordance with another embodiment, a client device utilized by a user receiving a makeup consultation obtains a digital signature from a computing device, the digital signature including contact information for a makeup professional and product information for a sequence of cosmetic products selected by the user of the client device, wherein the digital signature further comprises data specifying the sequence in which the cosmetic products were selected. The client device obtains a digital image of the user of the client device and generates a user interface and displaying virtual application of cosmetic effects on the digital image of the user. The cosmetic effects correspond to the cosmetic products specified in the digital signature, wherein virtual application of the cosmetic effects is displayed in a same order as the sequence specified in the digital signature. The client device displays the contact information of the makeup professional in the user interface for further makeup consultation.

Another embodiment is a system that comprises a memory storing instructions and a processor coupled to the memory. The processor is configured by the instructions to obtain makeup professional credentials from a makeup professional, the makeup professional credentials being used to retrieve contact information for the makeup professional. The processor is further configured to obtain selections of cosmetic products and to obtain product information for each of the selected cosmetic products. The processor is further configured to generate a digital signature based on the makeup professional credentials and the selected cosmetic products, wherein the digital signature includes the contact information for the makeup professional and product information for each of the selected cosmetic products. The processor is further configured to grant access to the digital signature by a client device utilized by a user receiving a makeup consultation from the makeup professional.

Another embodiment is a system that comprises a memory storing instructions and a processor coupled to the memory. The processor is configured by the instructions to obtain a digital signature from a computing device, the digital signature including contact information for a makeup professional and product information for a sequence of cosmetic products selected by a user of the system, wherein the digital signature further comprises data specifying the sequence in which the cosmetic products were selected. The processor is further configured to obtain a digital image of a user of the system and to generate a user interface and displaying virtual application of cosmetic effects on the digital image of the user, wherein the cosmetic effects correspond to the cosmetic products specified in the digital signature, wherein virtual application of the cosmetic effects is displayed in a same order as the sequence specified in the digital signature. The processor is further configured to display the contact information of the makeup professional in the user interface.

Other systems, methods, features, and advantages of the present disclosure will be or become apparent to one with skill in the art upon examination of the following drawings and detailed description. It is intended that all such additional systems, methods, features, and advantages be included within this description, be within the scope of the present disclosure, and be protected by the accompanying claims.

### BRIEF DESCRIPTION OF THE DRAWINGS

Various aspects of the disclosure can be better understood with reference to the following drawings. The components in the drawings are not necessarily to scale, with emphasis instead being placed upon clearly illustrating the principles of the present disclosure. Moreover, in the drawings, like reference numerals designate corresponding parts throughout the several views.
FIG. 1 is a block diagram of a networked environment for generating and utilizing a digital signature in connection with a makeup consultation session according to various embodiments of the present disclosure.
FIG. 2 is a schematic diagram client device and the makeup consultation device of FIG. 1 according to various embodiments of the present disclosure.
FIG. 3 is a top-level flowchart illustrating examples of functionality implemented as portions of the devices in FIG. 1 for performing makeup consultation and generating a digital signature for virtual application of cosmetic products according to various embodiments of the present disclosure.
FIG. 4 illustrates an example user interface displayed on the client device in FIG. 1 according to various embodiments of the present disclosure.

### DETAILED DESCRIPTION

Various embodiments are disclosed for providing makeup consultation and generating a digital signature, where a computing device utilized by a makeup professional providing the makeup consultation obtains a sequence comprising ordered selections of cosmetic products. Product information for each of the selected cosmetic products is also obtained. A digital signature is generated based on the makeup professional credentials and the selected cosmetic products. As described in more detail below, the digital signature may include the contact information for the makeup professional and product information for each of the selected cosmetic products, where the digital signature further comprises data specifying the specific sequence in which the cosmetic products were selected. A user receiving the makeup consultation may then utilize a client device to access and import the digital signature into a virtual makeup application executing on the client device, thereby allowing the user to perform virtual application of the cosmetic products specified in the digital signature and to access information on how to purchase the cosmetic products.

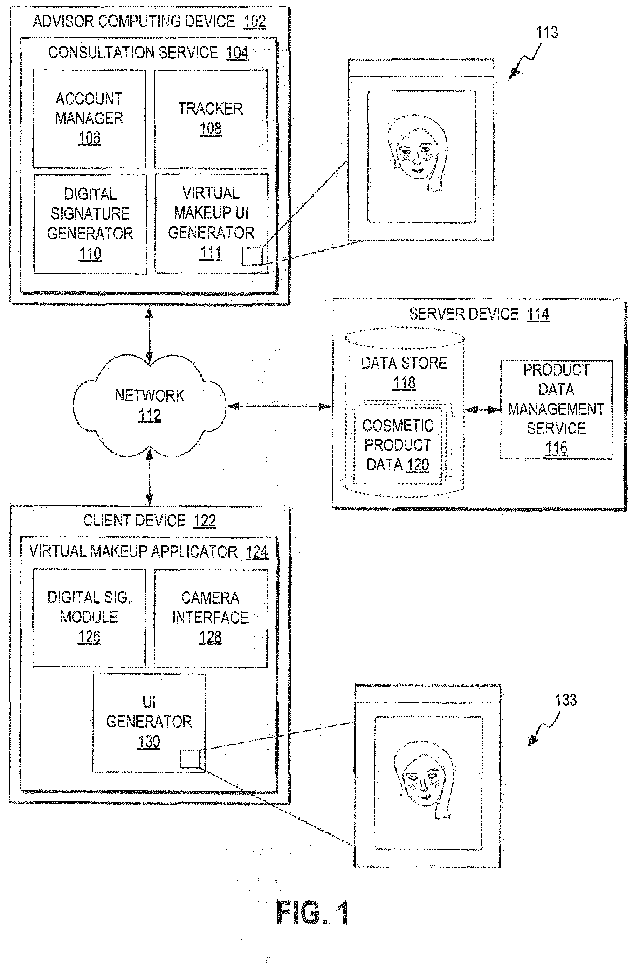

A description of a system for performing makeup consultation and for generating a digital signature for virtual application of cosmetic products is now described followed by a discussion of the operation of the components within the system. FIG. 1 is a block diagram of a networked environment that includes an advisor computing device 102, a server device 114, and a client device 122. The advisor computing device 102, server device 114, and the client device 122 are communicatively coupled via a network 112 such as, for example, the Internet, intranets, extranets, wide area networks (WANs), local area networks (LANs), wired networks, wireless networks, or other suitable networks, *etc.,* or any combination of two or more such networks.

Both the advisor computing device 102 and the client device 122 may be embodied as a computing device such as, but not limited to, a smartphone, a tablet computing device, a laptop, and so on. The server device 114 may comprise a server computer or any other system providing computing capability. Alternatively, the server device 114 may employ a plurality of computing devices that can be arranged, for example, in one or more server banks, computer banks or other arrangements. Such computing devices can be located in a single installation or can be distributed among different geographical locations.

The advisor computing device 102 is utilized by a makeup professional while providing makeup consultation to a user. A consultation service 104 executes on a processor of the advisor computing device 102 thereby causing the advisor computing device 102 to perform the operations/functions for implementing the features disclosed herein. The consultation service 104 includes an account manager 106, a tracker 108, a virtual makeup user interface (Ul) generator 111, and a digital signature generator 110.

The account manager 106 is configured to obtain user credentials from the makeup professional, where the makeup professional credentials include contact information for the makeup professional. The tracker 108 is configured to obtain a sequence comprising ordered selections of cosmetic products. For example, the tracker 108 may track each suggested cosmetic product worn by the user, including the specific order in which the cosmetic products are suggested and/or applied to the user by the makeup professional. As described below, this information is embedded in a digital signature and allows the user to later access this information for future use (*e.g.,* for virtual application of the suggested cosmetic products). During a makeup consultation with a user, the virtual makeup UI generator 111 is configured to generate a first virtual makeup user interface 113. In some embodiments, the user utilizes the first virtual makeup user interface 113 to try on a certain number of different cosmetic products (*e.g*., ten different cosmetic products) with the aid of a makeup professional. The user may then utilize the first virtual makeup user interface 113 to select a portion (*e.g.,* five) of the products tried on by the user. The tracker 108 is further configured to obtain product information for each of the selected cosmetic products. For some embodiments, the product information made by retrieved from a product management service 116 executing on the server device 114, which includes a data store 118 for storing cosmetic product data 120.

The digital signature generator 110 is configured to generate a digital signature based on the makeup professional credentials and the selected cosmetic products, where the digital signature includes the contact information for the makeup professional and product information for each of the selected cosmetic products. The digital signature also includes data specifying the sequence in which the cosmetic products were selected. The digital signature generator 110 is further configured to grant access to the digital signature by a client device 122 utilized by a user receiving the makeup consultation from the makeup professional. For example, the consultation service 104 may be configured to display the digital signature as a QR code or other barcode on a display of the advisor computing device 102. The user may then utilize the client device 122 to scan the displayed digital signature.

A virtual makeup applicator 124 executes on a processor of the client device 122 thereby causing the client device 122 to perform the operations/functions for implementing the features disclosed herein. The virtual makeup applicator 124 includes a digital signature module 126, a camera interface 128, and a user interface (UI) generator 130. The digital signature module 126 is configured to obtain a digital signature from the advisor computing device 102 and extract information embedded in the digital signature. The digital signature may include the contact information for a makeup professional and product information for a sequence of cosmetic products selected by the user of the client device 122. For some embodiments, the digital signature may also include data specifying the sequence in which the cosmetic products were selected.

The camera interface 128 is configured to obtain a digital image of the user of the client device 122. As one of ordinary skill will appreciate, the digital image may be encoded in any of a number of formats including, but not limited to, JPEG (Joint Photographic Experts Group) files, TIFF (Tagged Image File Format) files, PNG (Portable Network Graphics) files, GIF (Graphics Interchange Format) files, BMP (bitmap) files or any number of other digital formats. Alternatively, the digital image may be derived from a still image of a video encoded in formats including, but not limited to, Motion Picture Experts Group (MPEG)-1, MPEG-2, MPEG-4, H.264, Third Generation Partnership Project (3GPP), 3GPP-2, Standard-Definition Video (SD-Video), High-Definition Video (HD-Video), Digital Versatile Disc (DVD) multimedia, Video Compact Disc (VCD) multimedia, High-Definition Digital Versatile Disc (HD-DVD) multimedia, Digital Television Video / High-definition Digital Television (DTV/HDTV) multimedia, Audio Video Interleave (AVI), Digital Video (DV), QuickTime (QT) file, Windows Media Video (WMV), Advanced System Format (ASF), Real Media (RM), Flash Media (FLV), an MPEG Audio Layer III (MP3), an MPEG Audio Layer II (MP2), Waveform Audio Format (WAV), Windows Media Audio (WMA), 360 degree video, 3D scan model, or any number of other digital formats.

The UI generator 130 is configured to generate a second virtual makeup user interface 133 and display virtual application of cosmetic effects on the digital image of the user, where the cosmetic effects correspond to the cosmetic products specified in the digital signature. Furthermore, virtual application of the cosmetic effects is displayed in a same order as the sequence specified in the digital signature. The UI generator 130 is further configured to display the contact information of the makeup professional in the user interface.

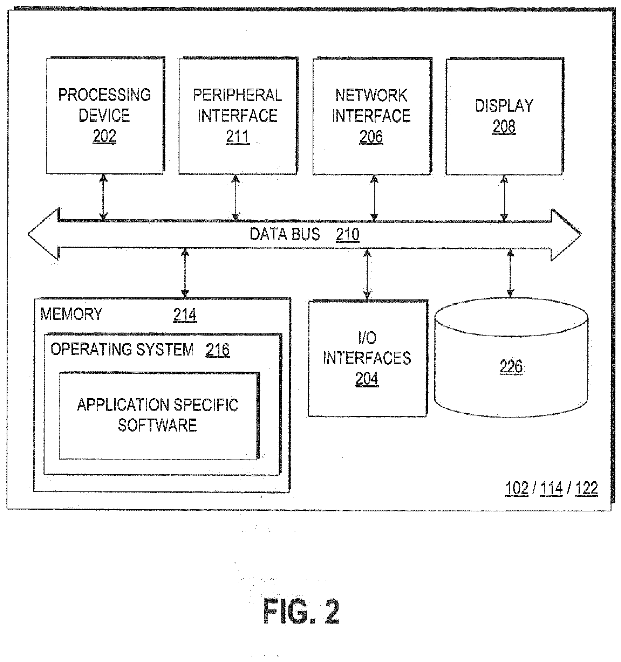

FIG. 2 illustrates a schematic block diagram for each of the advisor computing device 102, the server device 114, and the client device 122 in FIG. 1. Each of these computing devices 102, 114, 122 may be embodied in any one of a wide variety of wired and/or wireless computing devices, such as a desktop computer, portable computer, dedicated server computer, multiprocessor computing device, smart phone, tablet, and so forth. As shown in FIG. 2, each of these computing devices 102, 114, 122 comprises memory 214, a processing device 202, a number of input/output interfaces 204, a network interface 206, a display 208, a peripheral interface 211, and mass storage 226, wherein each of these components are connected across a local data bus 210.

The processing device 202 may include any custom made or commercially available processor, a central processing unit (CPU) or an auxiliary processor among several processors associated with the computing device, a semiconductor based microprocessor (in the form of a microchip), a macroprocessor, one or more application specific integrated circuits (ASICs), a plurality of suitably configured digital logic gates, and other well known electrical configurations comprising discrete elements both individually and in various combinations to coordinate the overall operation of the computing system.

The memory 214 may include any one of a combination of volatile memory elements (*e.g.,* random-access memory (RAM, such as DRAM, and SRAM, *etc.*)) and nonvolatile memory elements (e.g., ROM, hard drive, tape, CDROM, *etc.*). The memory 214 typically comprises a native operating system 216, one or more native applications, emulation systems, or emulated applications for any of a variety of operating systems and/or emulated hardware platforms, emulated operating systems, *etc.* For example, the applications may include application specific software which may comprise some or all the components of the computing devices 102, 114, 122 depicted in FIG. 1. In accordance with such embodiments, the components are stored in memory 214 and executed by the processing device 202, thereby causing the processing device 202 to perform the operations/functions relating to the features disclosed herein. One of ordinary skill in the art will appreciate that the memory 214 can, and typically will, comprise other components which have been omitted for purposes of brevity. For some embodiments, the components in the computing devices 102, 114, 122 may be implemented by hardware and/or software.

Input/output interfaces 204 provide any number of interfaces for the input and output of data. For example, where the computing device comprises a personal computer, these components may interface with one or more user input/output interfaces 204, which may comprise a keyboard or a mouse, as shown in FIG. 2. The display 208 may comprise a computer monitor, a plasma screen for a PC, a liquid crystal display (LCD) on a hand held device, a touchscreen, or other display device.

In the context of this disclosure, a non-transitory computer-readable medium stores programs for use by or in connection with an instruction execution system, apparatus, or device. More specific examples of a computer-readable medium may include by way of example and without limitation: a portable computer diskette, a random access memory (RAM), a read-only memory (ROM), an erasable programmable read-only memory (EPROM, EEPROM, or Flash memory), and a portable compact disc read-only memory (CDROM) (optical).

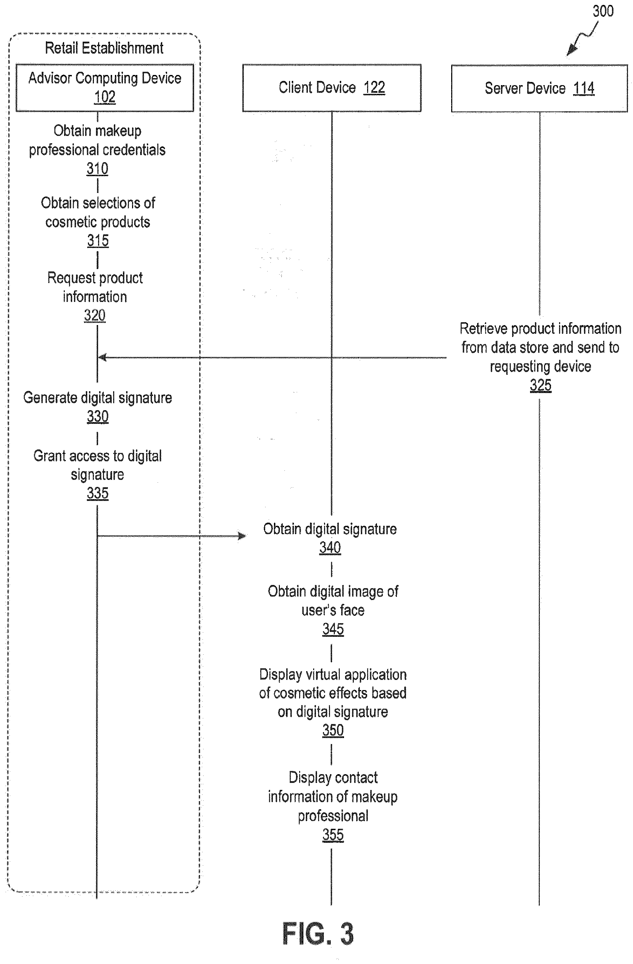

Reference is made to FIG. 3, which is a flowchart 300 that shows the interaction between the various components in the networked environment of FIG. 1 for performing makeup consultation and for generating a digital signature for virtual application of cosmetic products. It is understood that the flowchart 300 of FIG. 3 provides merely an example of the different types of functional arrangements that may be employed to implement the operation of the various components of the computing devices 102, 114, 122 depicted in FIG. 1. As an alternative, the flowchart 300 of FIG. 3 may be viewed as depicting an example of steps of a method implemented in the computing devices 102, 114, 122 according to one or more embodiments.

Although the flowchart 300 of FIG. 3 shows a specific order of execution, it is understood that the order of execution may differ from that which is depicted. For example, the order of execution of two or more blocks may be scrambled relative to the order shown. Also, two or more blocks shown in succession in FIG. 3 may be executed concurrently or with partial concurrence. It is understood that all such variations are within the scope of the present disclosure.

At block 310, the advisor computing device 102 obtains makeup professional credentials from the makeup professional, where the makeup professional credentials are used to retrieve contact information for the makeup professional. For some embodiments, the advisor computing device 102 may comprise a kiosk located in a retail establishment. At block 315, the advisor computing device 102 obtains selections of cosmetic products. For some embodiments, this may comprise scanning bar codes on the cosmetic products.

At block 320, the advisor computing device 102 requests and obtains product information for each of the selected cosmetic products. For some embodiments, the product information is obtained from the data store 118 in the server device 114 (FIG. 1) (block 325). At block 330, the advisor computing device 102 generates a digital signature based on the makeup professional credentials and the selected cosmetic products. The digital signature includes the contact information for the makeup professional and product information for each of the selected cosmetic products. The digital signature also includes data specifying the sequence in which the cosmetic products were selected.

At block 335, the advisor computing device 102 grants access to the digital signature by a client device utilized by a user receiving a makeup consultation from the makeup professional. For some embodiments, this may comprise receiving a request from the client device 122 and transmitting the digital signature to the client device 122 over a short-range wireless connection such as a Bluetooth connection, a WiFi connection, an NFC (near field communication) connection, a Zigbee connection, and so on. For some embodiments, granting access to the digital signature may comprise displaying the digital signature as a generating a Quick Response (QR) code on a display of the advisor computing device 102.

At block 340, the client device 122 obtains a digital signature from the advisor computing device 102, where the digital signature includes contact information for a makeup professional and product information for a sequence of cosmetic products selected by the user of the client device. The digital signature also includes data specifying the sequence in which the cosmetic products were selected. As discussed above, the client device 122 may obtain digital signature over a short-range wireless connection such as a Bluetooth connection, a WiFi connection, an NFC connection, a Zigbee connection, and so on. The client device 122 may also obtain the digital signature by scanning a Quick Response (QR) code on a display of the advisor computing device 102.

At block 345, the client device 122 obtains a digital image of the user of the client device 122. At block 350, the client device 122 generates a user interface and displays virtual application of cosmetic effects on the digital image of the user. The cosmetic effects correspond to the cosmetic products specified in the digital signature, where virtual application of the cosmetic effects is displayed in a same order as the sequence specified in the digital signature.

At block 355, the client device 122 displays the contact information of the makeup professional in the user interface. The client device 122 may also display a user interface control, where manipulation of the user interface control initiates a communication session with the computing device of the makeup professional. For some embodiments, the client device 122 may be further configured to display in the user interface an ordered listing of the sequence of cosmetic products selected by the user of the client device 122. Thereafter, the process in FIG. 3 ends.

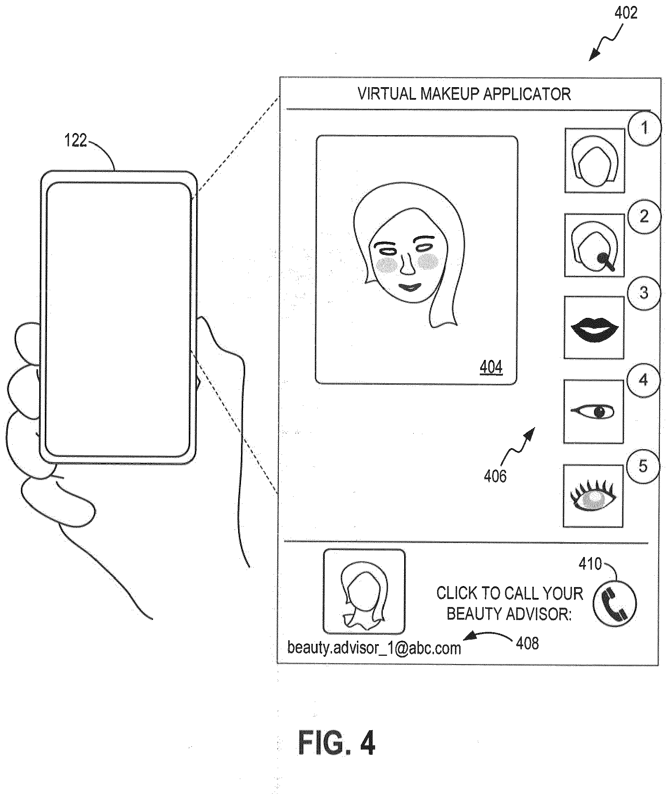

Having described the basic framework of a system for performing makeup consultation and generating a digital signature for virtual application of cosmetic products, reference is made to FIG. 4, which illustrates an example second virtual makeup user interface 402 displayed on the client device 122. As discussed above, the client device 122 may be embodied as a computing device such as, but not limited to, a smartphone, a tablet computing device, a laptop computer, and so on. Once the client device 122 obtains the digital signature from the advisor computing device 102, the digital signature may be imported into various applications executing on the client device 122. In the example shown, an application for performing virtual application of cosmetic effects imports the digital signature.

The second virtual makeup user interface 402 includes a preview window 404 that displays a facial region of the user of the client device 122. The preview window 404 also depicts virtual application of cosmetic effects 406 specified in the digital signature obtained by the client device 122. As shown, the cosmetic effects 406 are arranged according to the specific order in which each of the cosmetic effects 406 was recommended and/or applied to the user receiving a makeup consultation from the makeup professional. As described above, during the makeup consultation, the makeup professional utilizes the advisor computing device 102 to track each recommendation made to the user. For example, the tracker 108 may log recommended cosmetic products accepted by the user (*e.g.*, cosmetic products worn by the user).

The arrangement of the cosmetic effects 406 in the example second virtual makeup user interface 402 indicates the specific order in which each of the corresponding cosmetic products were recommended and/or accepted by the user. The preview window 404 shows virtual application of each of the cosmetic effects 406. Depending on the implementation, the user may click on each graphical thumbnail representation shown in the second virtual makeup user interface 402 to initiate virtual application of that particular cosmetic effect. In some implementations, clicking on a graphical thumbnail representation may also cause product information relating to the selected cosmetic effect to be displayed to the user. Also shown in the example second virtual makeup user interface 402 is the contact information 408 (*e.g.,* email address) for the makeup professional that provided the makeup consultation earlier to the user. The second virtual makeup user interface 402 may also include a UI control 410, where manipulation of the UI control 410 allows the user to contact the makeup professional by phone, video conferencing, and so on.

It should be emphasized that the above-described embodiments of the present disclosure are merely possible examples of implementations set forth for a clear understanding of the principles of the disclosure. Many variations and modifications may be made to the above-described embodiment(s) without departing substantially from the spirit and principles of the disclosure. All such modifications and variations are intended to be included herein within the scope of this disclosure and protected by the following claims.

## Claims

1. A method implemented in a computing device utilized by a makeup professional providing makeup consultation, comprising:
obtaining makeup professional credentials from the makeup professional, the makeup professional credentials being used to retrieve contact information for the makeup professional;
obtaining selections of cosmetic products;
obtaining product information for each of the selected cosmetic products;
generating a digital signature based on the makeup professional credentials and the selected cosmetic products, wherein the digital signature includes the contact information for the makeup professional and product information for each of the selected cosmetic products; and
granting access to the digital signature by a client device utilized by a user receiving a makeup consultation from the makeup professional.

2. The method of claim 1, wherein the product information is obtained from a data store maintained by a remote server.

3. The method of claim 1 or 2, wherein granting access to the digital signature by a client device comprises:
receiving a request from the client device; and
transmitting the digital signature to the client device over a short-range wireless connection comprising one of: a Bluetooth connection, a WiFi connection, NFC (near field communication) connection, and a Zigbee connection.

4. The method of one of claims 1 to 3, wherein granting access to the digital signature by a client device comprises displaying the digital signature as a generating a Quick Response (QR) code on a display of the computing device.

5. The method of one of claims 1 to 4, wherein the computing device comprises a kiosk located in a retail establishment, and wherein the selections of cosmetic products are made using a touchscreen on the kiosk.

6. The method of one of claims 1 to 5, wherein obtaining the selections of cosmetic products comprises scanning bar codes on the cosmetic products.

7. The method of one of claims 1 to 6, wherein obtaining the selections of cosmetic products further comprises tracking a sequence in which the cosmetic products are selected, wherein the digital signature further comprises data specifying the sequence in which the cosmetic products were selected.

8. A method implemented in a client device utilized by a user receiving a makeup consultation, comprising:
obtaining a digital signature from a computing device, the digital signature including contact information for a makeup professional and product information for a sequence of cosmetic products selected by the user of the client device, wherein the digital signature further comprises data specifying the sequence in which the cosmetic products were selected;
obtaining a digital image of the user of the client device;
generating a user interface and displaying virtual application of cosmetic effects on the digital image of the user, wherein the cosmetic effects correspond to the cosmetic products specified in the digital signature, wherein virtual application of the cosmetic effects is displayed in a same order as the sequence specified in the digital signature; and
displaying the contact information of the makeup professional in the user interface for further makeup consultation.

9. The method of claim 8, further comprising displaying in the user interface an ordered listing of the sequence of cosmetic products selected by the user of the client device.

10. The method of claim 8 or 9, wherein the digital signature is obtained over a short-range wireless connection comprising one of: a Bluetooth connection, a WiFi connection, NFC (near field communication) connection, and a Zigbee connection.

11. The method of claim 10, wherein the digital signature is obtained by scanning a Quick Response (QR) code on a display of the computing device.

12. The method of claim 10 or 11, wherein displaying the contact information of the makeup professional in the user interface further comprising displaying a user interface control, wherein manipulation of the user interface control initiates a communication session with the computing device of the makeup professional based on the contact information.

13. A system, comprising:
a memory storing instructions;
a processor coupled to the memory and configured by the instructions to at least perform a method of one of claims 1 to 7.

14. The system of claim 13, wherein the system is implemented in a retail establishment.

15. A system, comprising:
a memory storing instructions;
a processor coupled to the memory and configured by the instructions to at least perform a method of one of claims 8 to 12.
